# EUROPÄISCHE PATENTSCHRIFT

(11) **EP 1 957 393 B1**
(45) Veröffentlichungstag und Bekanntmachung des Hinweises auf die Patenterteilung: **26.01.2011**
(21) Anmeldenummer: 06819619.5
(22) Anmeldetag: 20.11.2006
(51) Int. Cl.: B67D 1/08

(54) **AUSGABEGERÄT FÜR FLIEß- ODER SCHÜTTFÄHIGE GÜTER**
DISPENSING DEVICE FOR FREE-FLOWING OR POURABLE PRODUCTS
APPAREIL DISTRIBUTEUR POUR PRODUITS COULANTS OU EN VRAC

(30) Priorität: 30.11.2005 DE 102005057152; 07.11.2006 DE 202006017049 U
(43) Veröffentlichungstag der Anmeldung: 20.08.2008
(73) Patentinhaber: BSH Bosch und Siemens Hausgeräte GmbH, 81739 München (DE)
(72) Erfinder: BUCHSTAB, Martin, 73441 Bopfingen (DE); DUMKOW, Irene, 89567 Sontheim (DE); FEINAUER, Adolf, 89537 Giengen (DE); FLINNER, Klaus, 89447 Zöschingen (DE); HEGER, Bernd, 89437 Haunsheim (DE); NALBACH, Peter, 73230 Kirchheim/Nabern (DE); YAZAN, Kasim, 89073 Ulm (DE)
(86) Internationale Anmeldenummer: PCT/EP2006/068669
(87) Internationale Veröffentlichungsnummer: WO 2007/063003

(56) Entgegenhaltungen:
- EP-A- 1 584 602
- WO-A-2006/120096
- US-A- 6 039 219
- US-A- 6 138 869

## Beschreibung

Die vorliegende Erfindung betrifft ein Ausgabegerät zur Ausgabe von fließ- oder schüttfähigen Gütern, insbesondere von gekühlter Flüssigkeit und/oder Eisstücken, gemäβ dem Oberbegriff des Anspruchs 1, in einen Behälter. Ein Ausgabegerät Ist zum Beispiel aus GB 2 401 169 A bekannt. Bei diesem Ausgabegerät ist eine Ausgabeöffnung im oberen Bereich einer Nische angeordnet, in der ein zu befüllender Behälter platziert werden kann. Am Boden der Nische befindet sich eine Schale, die zum Auffangen von verschüttetem Füllgut dient. Um die Schale entleeren und ggf. reinigen zu können, ist sie aus der Nische entnehmbar. Eine geeignete Form des zu befüllenden Behälters vorausgesetzt, kann sie auch als eine Abstellfläche für den Behälter während des Befüllens dienen.

Um beim Befüllen eines Behälters zu verhindern, dass Füllgut verspritzt, muss der obere Rand des Behälters möglichst nahe unter der Ausgabeöffnung platziert sein. Dann können Spritzer, die bei niedrigem Stand des Füllgutes im Behälter entstehen, diesen in der Regel nicht verlassen, und wenn der Füllgutstand hoch ist, ist gleichzeitig die Fallhöhe des Füllgutes so gering, dass sich kaum Spritzer bilden. Behälter, die zum Befüllen in der Nische abgestellt werden, müssen also sehr genau, sowohl in ihren seitlichen Abmessungen als auch in der Höhe, an die Nische angepasst sein, um sauber befüllt werden zu können. Alle anderen Behälter müssen freihändig unter die Ausgabeöffnung gehalten werden, doch dies erhöht wiederum die Gefahr des Verschüttens, wenn der Behälter nicht ruhig gehalten wird.

Die Druckschrift US 6,138,869 offenbart ein Ausgabegerät gemäβ dem Oberbegriff des Anspruchs 1, mit einer Fallstation, welche eine drehbar gelagerte oder herausnehmbare Zwischenablage zur Aufnahme eines Getränkebehälters aufweist.

Die am 16. November 2006 veröffentlichte WO 2006/120096 A1 offenbart einen Becherträger für einen Kühlschrank, welcher mit einem Gelenk versehen ist und aus einem Ausgabeschacht des Kühlschranks herausgeklappt werden kann.

Aufgabe der Erfindung ist, ein Ausgabegerät für fließ- oder schüttfähige Güter zu schaffen, das ein sauberes Befüllen von Behältern unterschiedlicher Abmessungen gestattet.

Die Aufgabe wird gelöst durch ein Ausgabegerät gemäβ Anspruch 1.

Je nach Stellung des Abstellteiles ist es somit möglich, Behälter mit einer an den ersten Abstand oder an den zweiten Abstand angepassten Höhe sicher zu befüllen.

Die der Ausgabeöffnung in dem zweiten Abstand gegenüberliegende Abstellfläche kann eine zweite Abstellfläche sein, die in der ersten Stellung durch das Abstellteil verdeckt ist, so dass sie durch Bewegen des Abstellteils in die zweite Stellung frei gelegt wird, um einen Behälter darauf zu stellen.

Alternativ kann die der Ausgabeöffnung in dem zweiten Abstand gegenüberliegende Abstellfläche auch die erste Abstellfläche selbst in der zweiten Stellung des Abstellteils sein. Hierfür ist die geführte Bewegung des Abstellteils zweckmäßigerweise eine parallele oder vorzugsweise mit einer geringen Drehung überlagerte Verschiebung.

Als zweite Alternative kann die der Ausgabeöffnung in dem zweiten Abstand gegenüberliegende Abstellfläche eine an dem Abstellteil gebildete dritte Abstellfläche sein. In diesem Fall kann die geführte Bewegung des Abstellteils im Wesentlichen eine Schwenkbewegung sein.

Die obigen Alternativen sind dahingehend miteinander kombinierbar, dass eine durch die Bewegung des Abstellteils in die zweite Stellung frei gelegte, stationäre zweite Abstellfläche und eine Abstellfläche des Trägerteils gleichzeitig der Ausgabeöffnung in verschiedenen Abständen gegenüber liegen können, wodurch sich zusätzliche Möglichkeiten zur Platzierung unterschiedlich großer Behälter ergeben.

Während sich das Abstellteil in der ersten Stellung in der Nische und damit vertikal unterhalb der Ausgabeöffnung befinden kann, ist es zweckmäßigerweise in der zweiten Stellung wenigstens teilweise aus der Nische heraus verlagert.

Insbesondere aber nicht nur bei einem in der zweiten Stellung aus der Nische heraus verlagerten Abstellteil ist es zweckmäßig, wenn ein Rückstellelement auf das Abstellteil in seiner zweiten Stellung wirkt, um es zurück in die erste Stellung zu beaufschlagen. So wird vermieden, dass das Abstellteil länger als nötig aus der Nische vorsteht, und die Gefahr, dass ein Benutzer gegen das Abstellteil stößt und es dabei beschädigt oder sich verletzt, ist minimiert.

Um dennoch eine Betätigung des Abstellteiles und ein Befüllen eines Behälters mit einer einzigen Hand zu ermöglichen, ist das Abstellteil zweckmäßigerweise in der zweiten Stellung verrastbar.

Einer ersten Ausgestaltung zufolge kann das Abstellteil in der zweiten Stellung durch einen Riegel verrastet sein, und der Riegel ist durch Drücken einer Taste verschiebbar, um die Verrastung aufzuheben.

Einer zweiten Ausgestaltung zufolge kann das Abstellteil durch einmaliges Bewegen aus der ersten Stellung über die zweite Stellung hinaus in der zweiten Stellung verrastbar und durch erneutes Bewegen über die zweite Stellung hinaus entrastbar sein.

Ein erfindungsgemäβes Ausgabegerät mit einem Schlitten schafft die Möglichkeit, das Abstellteil für den Übergang in seine zweite Stellung aus der Nische heraus vorzuschieben, so dass es eine Öffnung in einer dem Ausgabegerät vorgeblendeten Dekorplatte passieren und jenseits dieser Öffnung durch die Dekorplatte ungehindert in die zweite Stellung gebracht werden kann.

Um die Nutzung des Abstellteiles zu vereinfachen, ist vorzugsweise eine Verschiebung des Schlittens an die Bewegung des Abstellteiles gekoppelt, wobei der Schlitten eine in die Nische eingefahrene Stellung einnimmt, wenn das Abstellteil in der ersten Stellung ist, und eine aus der Nische ausgefahrene Stellung einnimmt, wenn das Abstellteil in der zweiten Stellung ist.

Die mehreren Abstellflächen erlauben es einem Benutzer, einen zu befüllenden Behälter jeweils auf derjenigen Abstellfläche zu platzieren, die an die Höhe des Behälters am besten angepasst ist. So ist die Wahrscheinlichkeit, dass beim Befüllen Füllgut verschüttet wird oder verspritzt, minimiert. Falls dennoch Füllgut verschüttet wird, ist eine einfache Reinigung dadurch gewährleistet, dass das Basisteil - und mit ihm das daran gehaltene Abstellteil - aus der Nische entnehmbar ist und außerhalb des Ausgabegerätes, zum Beispiel unter fließendem Wasser, gereinigt werden kann.

Vorzugsweise kleidet das Basisteil zumindest einen unteren Bereich der Nische aus. So wird verhindert, dass die Wände der Nische selbst im Betrieb bespritzt werden, und der zum Reinigen der Nische erforderliche Arbeitsaufwand wird auf ein Minimum reduziert.

Das Basisteil kann in der Nische durch Schienen geführt sein, die sich in der Entnahmerichtung des Trägerteiles erstrecken; alternativ oder ergänzend können das Basisteil und die Nische einen Stift bzw. eine Buchse umfassen, die sich in der Entnahmerichtung des Basisteiles erstrecken.

In beiden Fällen genügt ein einfacher, sich quer zur Entnahmerichtung des Trägerteiles erstreckender Stift, um das montierte Basisteil in der Nische zu sichern.

Der Stift ist vorzugsweise unauffällig an einer in der ersten Stellung durch das Abstellteil verdeckten Stelle angebracht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Kältegerätes, das mit einem Ausgabegerät für Eis und gekühltes Wasser gemäß der vorliegenden Erfindung ausgestattet ist;
- Fig. 2: einen schematischen Schnitt durch eine Tür des Kältegerätes, in der das Ausgabegerät eingebaut ist;
- Fig. 3: eine perspektivische Ansicht des Basisteiles des Ausgabegerätes;
- Fig. 4: eine perspektivische Ansicht des Ausgabegerätes mit Träger in aufgeklappter Stellung;
- Fig. 5: eine perspektivische Ansicht des Ausgabegerätes, aus dem der Träger entfernt ist;
- Fig. 6: eine perspektivische Ansicht eines Basisteiles gemäß einer zweiten Ausgestaltung der Erfindung;
- Fig. 7: das Basisteil aus Fig. 6 zusammen mit einem daran montierten Schlitten;
- Fig. 8: eine Baugruppe bestehend aus dem Basisteil und dem Schlitten der Fig. 7 sowie einem an den Schlitten angelenkten Abstellteil in aufgeklappter Stellung;
- Fig. 9: einen Schnitt durch die Baugruppe der Fig. 8 in geschlossener Stellung;
- Fig. 10: einen Schnitt durch die Baugruppe der Fig. 8 in offener Stellung;
- Fig. 11: einen Schnitt durch eine alternative Ausgestaltung der Baugruppe in geschlossener Stellung; und
- Fig. 12: eine Führungsnut der Baugruppe aus Fig. 11.

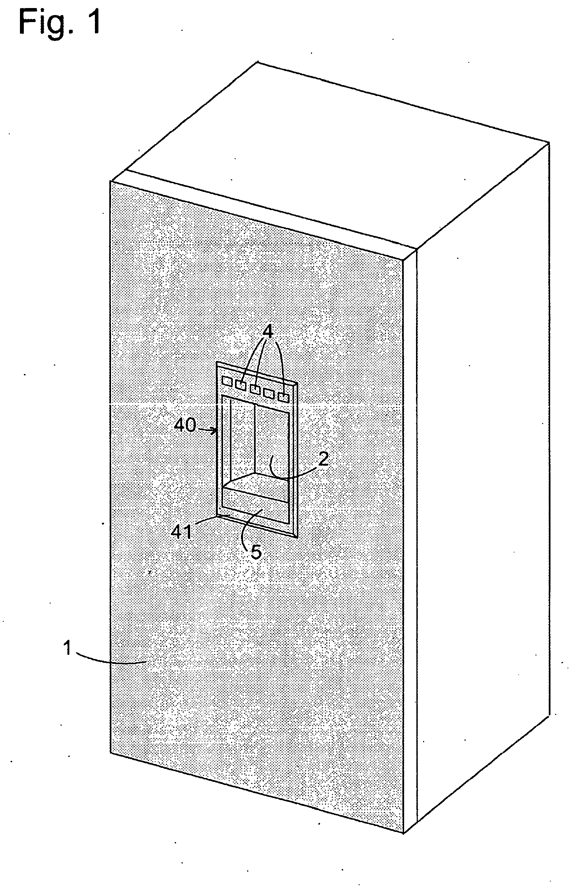

Fig. 1 ist eine perspektivische Ansicht eines Kältegeräts mit einer Tür 1, in der ein Ausgabegerät für Wasser und Eis montiert ist. In die Außenhaut der Tür 1 ist zentral ein Fenster geschnitten, in die ein nach vorn offenes Kunststoffgehäuse 40 eingefügt ist. Das Gehäuse begrenzt eine Nische 2, in der oben eine in der Fig. nicht sichtbare Ausgabeöffnung für Wasser und Eis angebracht ist und in der ein zu befüllender Behälter platziert werden kann. Ein umlaufender Rahmen 41 des Gehäuses 40 verdeckt das Fenster. In einem oberen Bereich des Rahmens 41 ist ein Bedienfeld mit mehreren Tasten 4 gebildet. Ein unterer Bereich der Nische 2 ist von einem Träger 5 ausgefüllt, dessen Funktion weiter unten erläutert wird.

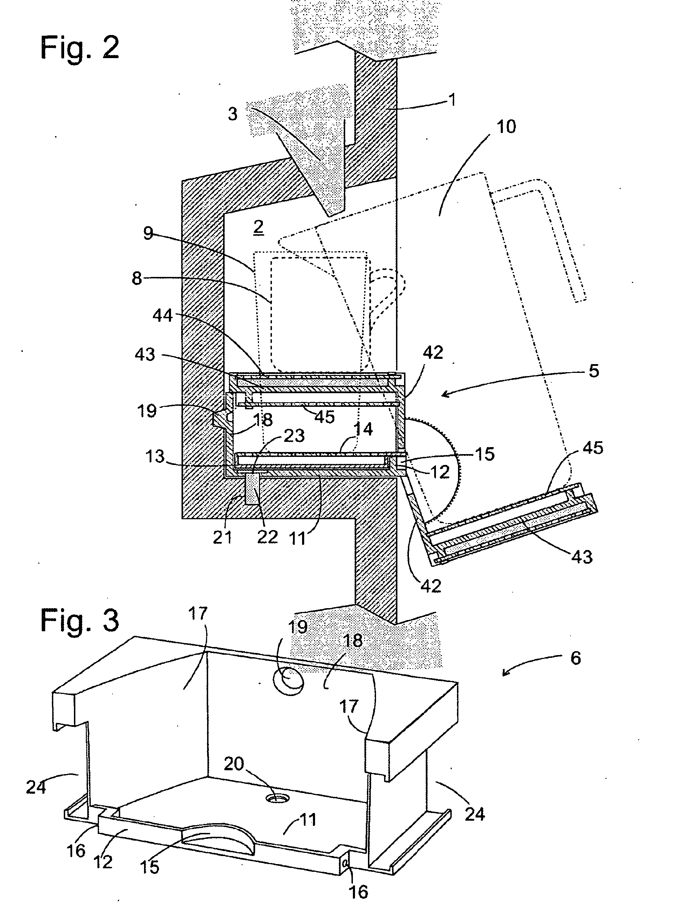

Fig. 2 zeigt einen Schnitt durch die Tür 1 in Höhe der Nische 2. Die Ausgabeöffnung für Eis und/oder gekühltes Wasser ist mit 3 bezeichnet.

Der Träger 5 umfasst zwei Teile, ein Basisteil 6 und ein Abstellteil 7, die um eine quer zur Schnittebene der Figur 1 ausgerichtete Achse gegeneinander schwenkbar sind. Fig. 2 zeigt das Abstellteil 7 gleichzeitig in zwei verschiedenen Anschlagstellungen seiner Schwenkbewegung, einer Ruhestellung, in welcher das Abstellteil 7 in die Nische 2 eintaucht, wie auch in Fig. 1 gezeigt, und einer ausgeklappten Stellung, in welcher sich das Abstellteil 7 außerhalb der Nische 2 befindet.

Das Abstellteil 7 ist im Querschnitt in etwa L-förmig, mit einer in der Ruhestellung vertikalen Frontplatte 42, die sich über die gesamte Breite der Nische 2 erstreckt, und einem rechtwinklig zur Frontplatte 42 orientierten, in der Ruhestellung horizontal in die Nische 2 eingreifenden und deren gesamte Querschnittsfläche ausfüllenden Tablett 43. Ober- und Unterseite des Tabletts 43 sind ausgehöhlt, und die Hohlräume sind jeweils durch einen an dem Tablett 43 lösbar eingerasteten Rost 44 bzw. 45 überdeckt. Auf dem oberen Rost 44 kann in der Ruhestellung ein Behälter von geringer Höhe, wie etwa eine gestrichelt dargestellte Tasse 8, in geringem Abstand von der Ausgabeöffnung 3 platziert werden.

In der ausgeklappten Stellung des Abstellteils 7 liegt das Basisteil 6 frei.

Fig. 3 zeigt eine perspektivische Ansicht des Basisteiles 6. Das Basisteil 6 hat in etwa die Form eines quaderförmigen Kastens mit offener Ober- und Vorderseite. Die Bodenplatte 11 des Kastens ist an der Vorderseite durch einen schmalen Steg 12 begrenzt, um eine flache Schale zu bilden, in der ein Tropfenfänger platzierbar ist. Der Tropfenfänger ist in Fig. 2 gezeigt. Er umfasst seinerseits eine flache Schale 13, deren offene Oberseite durch ein Rost 14 abgedeckt ist. In der Mitte des Steges 12 ist eine Einbuchtung 15 gebildet, über die ein Rand der Schale 13 vorsteht, so dass in der aufgeklappten Stellung des Trägers 5 der Tropfenfänger bequem entnommen und entleert werden kann.

In einen über die Vorderseite der Tür 1 vorspringenden Abschnitt des Steges 12 sind kollinear zwei Sackbohrungen 16 gebildet, die vorgesehen sind, um jeweils als Achse für die Schwenkbewegung des Abstellteiles 7 fungierende Wellenstücke aufzunehmen.

In der ausgeklappten Stellung ist ein mittelgroßer Behälter wie etwa ein Becher 9 in der Nische 2 unmittelbar auf dem Tropfenfänger des Basisteils 6 platzierbar, oder ein großer Behälter wie etwa ein Krug 10 ist auf dem in der aufgeklappten Stellung schräg nach oben gekehrten Rost 45 des Abstellteils 7 in einer Stellung platzierbar, in welcher die Öffnung des Kruges 10 in die Nische 2 eingreift, während sein Fuß außerhalb der Nische 2 auf dem Abstellteil 7 ruht. Die Höhe des Kruges kann daher um etwa die Höhe der Frontplatte 41 größer sein als die Höhe der Nische 2.

Seitenwände 17 und eine Rückwand 18 des Basisteiles 6 schirmen das Innere der Nische 2 vor Spritzern ab, die entstehen können, wenn in aufgeklappter Stellung des Abstellteiles 7 Füllgut verschüttet wird oder direkt von der Ausgabeöffnung 3 auf den Rost 14 tropft.

An der Rückwand 18 ist ferner ein Vorsprung 19 gebildet, der sich in Tiefenrichtung der Nische 2 erstreckt und in eine komplementäre Aussparung an der Rückwand der Nische 2 eingreift, wenn der Träger 5 korrekt in der Nische 2 platziert ist.

Bei korrekter Platzierung des Trägers 5 fluchtet ferner eine in der Bodenplatte 11 gebildete Öffnung 20 mit einer Aussparung 21 am Boden der Nische 2, so dass, wie in Fig. 1 gezeigt, ein Verriegelungsstift 22 durch die Öffnung 20 in die Aussparung 21 eingeführt werden kann. Der Verriegelungsstift 22 kann eine Schraube sein, die in ein Gewinde der Aussparung 21 eingreift, es kann sich aber auch um einen einfachen zylindrischen oder angespitzten Stift handeln, der zur leichteren Handhabung einen verbreiterten Kopf 23 trägt. Durch den Eingriff des Vorsprunges 19 und des Stiftes 22 in die jeweils zugeordneten Aussparungen der Nische 2 ist der Träger 5 in der Nische 2 unbeweglich verankert und dadurch in der Lage, in der aufgeklappten Stellung einen schweren Behälter wie den Krug 10 zu tragen, ohne aus der Nische 2 herauszufallen.

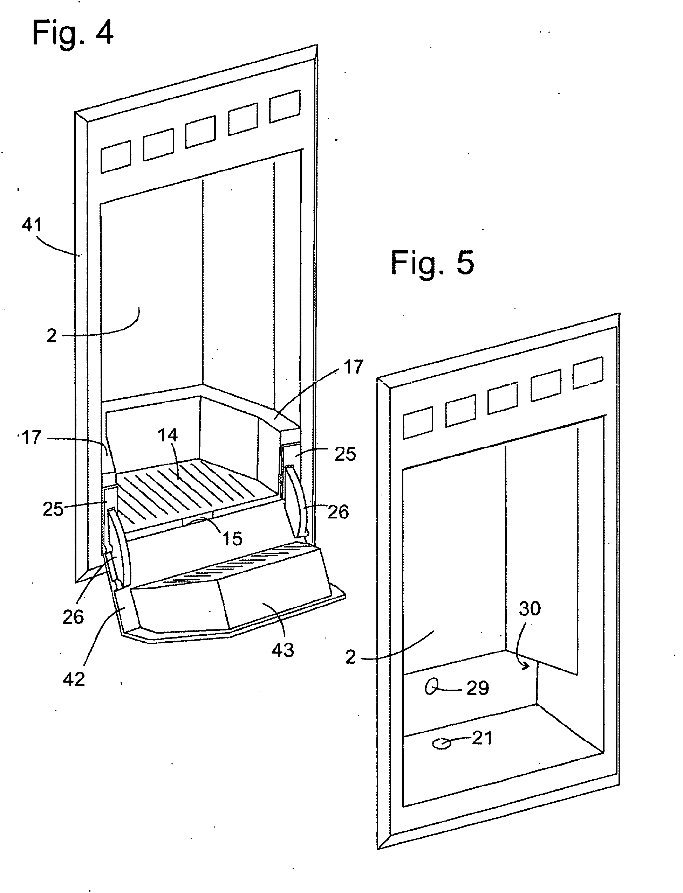

In den breiten Seitenwänden 17 des Basisteiles 6 sind Einsteckfächer 24 gebildet, die vorgesehen sind, um jeweils ein Mechanikmodul 25 (siehe Fig. 4) aufzunehmen. Die Mechanikmodule 25 enthalten im Inneren jeweils ein Zahnrad, das durch Reibung, durch ein Schwungrad oder dergleichen gebremst ist und mit einem Zahnradsegment 26 an der Frontplatte 42 des Abstellteiles 7 kämmt. Es kann auch jeweils eine Feder in den Mechanikmodulen 25 vorgesehen sein, die das Abstellteil 7 in Richtung seiner eingeklappten Stellung beaufschlagt und kräftig genug ist, um das Abstellteil 7 einzuklappen, wenn es nicht durch ein zu befüllendes Gefäß belastet ist.

Fig. 5 zeigt die Nische 2 ohne den Träger 5 darin. Man erkennt die Aussparung 22 am Boden der Nische 2 sowie die den Vorsprung 19 aufnehmende Aussparung an deren Rückwand, in der Fig. mit 29 bezeichnet. Zu sehen ist auch eine von zwei Aussparungen 30, die einander an den Seitenwänden der Nische 2 gegenüberliegen. Die Aussparungen 30 nehmen hintere Ecken der Seitenwände des Basisteils 6 auf und bilden so eine Schienenführung, in der das Basisteil in Tiefenrichtung der Nische verschiebbar geführt ist.

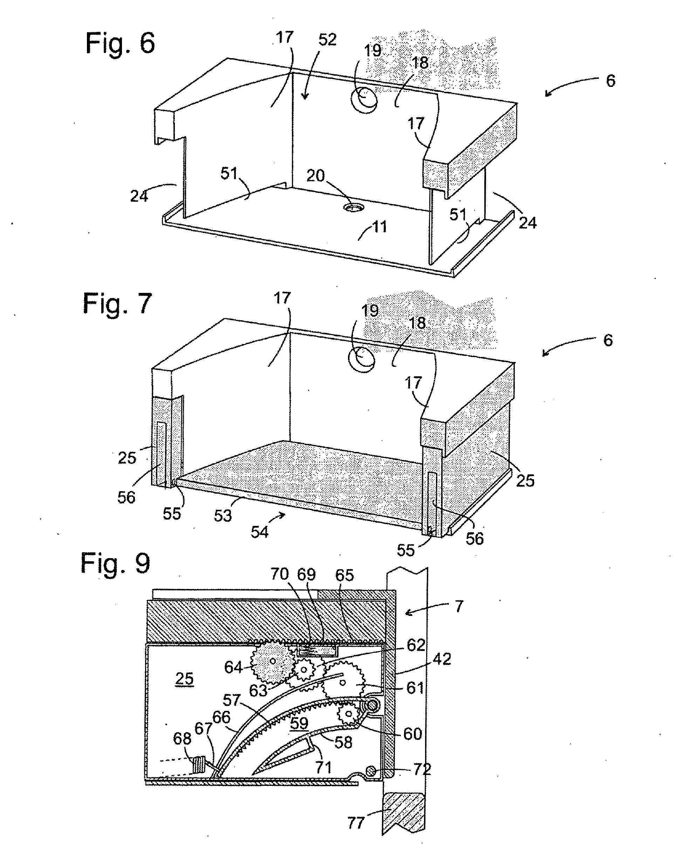

Fig. 6 zeigt eine perspektivische Ansicht eines Basisteiles 6 gemäß einer zweiten Ausgestaltung der Erfindung. Elemente, die denen des Basisteiles 6 aus Fig. 3 entsprechen, sind in der Figur mit denselben Bezugszeichen bezeichnet und werden nicht erneut beschrieben. Der die Bodenplatte 11 begrenzende Steg 12 ist entfallen; die Vorderkante der Bodenplatte 11 liegt in einer gleichen Ebene mit Vorderkanten der Seitenwände 17; am Fuß der Seitenwände 17 ist zwischen diesen und der Bodenplatte 11 jeweils ein Spalt 51 gebildet, der die seitlichen Einsteckfächer 24 mit einem zentralen Innenraum 52 des Basisteiles 6 verbindet.

Durch die Spalte 51 erstreckt sich, wie in Fig. 7 gezeigt, eine Bodenplatte 53, die in die zwei Einsteckfächer 24 eingeschobene Mechanikmodule 25 zu einem in sich steifen Schlitten 54 verbindet. Während bei der Ausgestaltung der Figuren 1 bis 5 die Mechanikmodule 25 in den Einsteckfächern 24 unbeweglich aufgenommen sind, sind sie gemäß dieser Ausgestaltung in Tiefenrichtung verschiebbar. Die Verbindung der Mechanikmodule durch die Bodenplatte 53 gewährleistet, dass sich beide jeweils parallel zueinander und in gleichem Maße verschieben. Auf der Bodenplatte 53 kann wie auf der Bodenplatte 11 der ersten Ausgestaltung eine (in Fig. 7 nicht dargestellte) mit einem Rost abgedeckte Schale zum Auffangen von Spritzwasser angeordnet sein.

Die in Fig. 7 gezeigte Stellung, in der die Mechanikmodule 25 vollständig in den Einsteckfächern 24 aufgenommen sind, entspricht einer geschlossenen Stellung des Abstellteiles 7. Da das Abstellteil in dieser Stellung genauso wie das Abstellteil 7 der ersten Ausgestaltung die Mechanikmodule 25 verdeckt, ist es in Fig. 7 fortgelassen, um die Mechanikmodule 25 zeigen zu können.

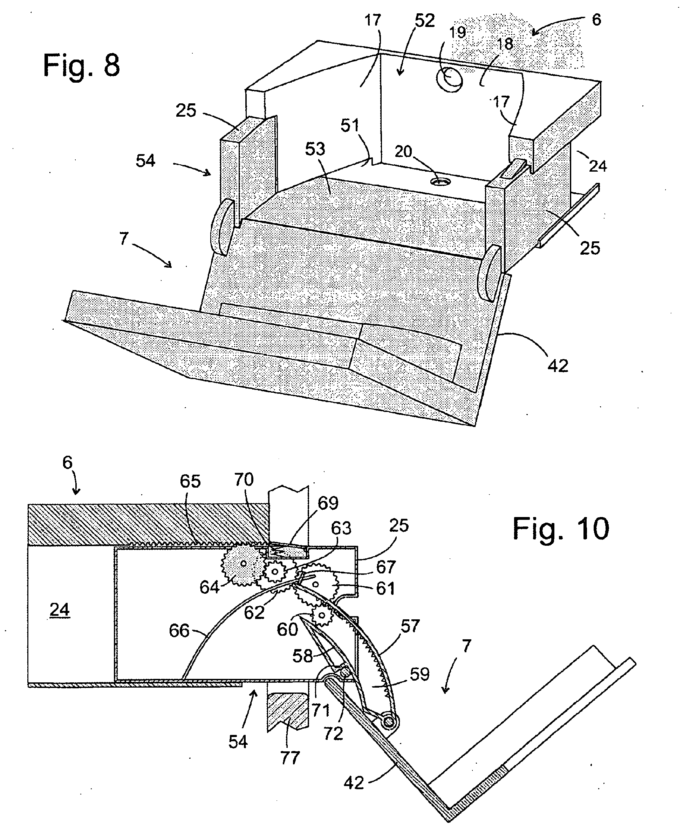

Fig. 8 zeigt das Basisteil 6 mit dem Schlitten 54 und dem an dem Schlitten schwenkbar aufgehängten Abstellteil 7 in offener Stellung. Man erkennt, dass in dieser Stellung der Schlitten 54 aus dem Basisteil 6 heraus vorgeschoben ist und die Mechanikmodule 25 zum Teil aus den Einsteckfächern 24 herausgerückt sind. Die Schwenkachse des Abstellteiles 7, die durch in Fig. 7 gezeigte einander gegenüberliegende Achsaufnahmeöffnungen 55 der zwei Mechanikmodule 25 festgelegt ist, ist so gegenüber der Stellung der Fig. 7 vorverlagert. Dadurch ist es möglich, das Abstellteil 7 auch dann abwärts in die geöffnete Stellung zu schwenken, wenn dessen Frontplatte 42 in der geschlossenen Stellung hinter einer benachbarten vertikalen Oberfläche, insbesondere der Außenfläche einer Dekorplatte bei einem Einbaugerät, zurückspringt.

Die Figuren 9 und 10 zeigen jeweils einen Schnitt durch die Baugruppe der Fig. 8 in Höhe eines ihrer Mechanikmodule 25 in der geschlossenen bzw. der offenen Stellung. Die beiden Mechanikmodule sind zueinander spiegelsymmetrisch aufgebaut. Die Schnittebene der Figuren 9, 10 erstreckt sich durch einen an der Stirnseite eines jeden der Mechanikmodule 25 gebildeten Schlitz 56. Durch diesen Schlitz 56 greift eine gekrümmte, schwenkbar an die Frontplatte 42 des Abstellteiles 7 angelenkte Zahnstange 57 in das Innere des Mechanikmoduls 25 ein. Die Zahnstange 57 ist mit einer ihr gegenüberliegenden Wand 58 durch eine außerhalb der Schnittebene parallel zu dieser verlaufende Wand einteilig und starr verbunden. Zusammen mit der Wand 58 begrenzt die Zahnstange 57 einen Kanal 59 von im Wesentlichen konstanter Breite, in den ein um eine in Bezug auf das Gehäuse des Mechanikmoduls 25 feste Achse drehbares Zahnrad 60 eingreift. Die Wand 58 verhindert durch Kontakt mit dem Zahnrad 60, dass das Zahnrad 60 mit den Zähnen der Zahnstange 57 außer Eingriff kommen kann, wenn zwischen dem Zahnrad 60 und der Zahnstange 57 eine Kraft wirkt. So wird, wenn das Abstellteil 7 vorgeklappt und die Zahnstange 57 aus dem Mechanikmodul 25 herausgezogen wird, das Zahnrad 60 in Drehung versetzt.

Über ein Untersetzungsgetriebe mit Zahnrädern 61, 62, 63 treibt das Zahnrad 60 ein Zahnrad 64 an, das seinerseits mit einer Zahnstange 65 kämmt, die am Basisteil 6 an der Decke des das Mechanikmodul 25 aufnehmenden Einsteckfaches 24 gebildet ist. Die durch das Aufschwenken des Abstellteiles 7 angetriebene Drehung des Zahnrades 64 treibt somit das Mechanikmodul 25 nach vorn aus dem Einsteckfach 24 hinaus und verlagert so die Schwenkachse des Abstellteiles 7.

Zwei an den Seitenflächen des Gehäuses des Mechanikmoduls 25 abgestützte Rippen 66 verlaufen schräg von oben nach unten durch das Innere des Mechanikmoduls 25. Die Schnittebene der Figuren 9 und 10 verläuft durch einen Spalt zwischen den beiden sich gegenüberliegenden Rippen 66. Durch diesen Spalt erstreckt sich ein Vorsprung 67 der Zahnstange 57, an dem eine Rückstellfeder 68 angreift. Die Rückstellfeder 68 übt eine Zugkraft auf die Zahnstange 57 aus, die einer Schwenkbewegung des Abstellteiles 7 in die offene Stellung entgegenwirkt.

An der Oberseite des Mechanikmoduls 25 ist ein schwenkbarer Riegel 69 angeordnet, der durch eine Feder 70 gegen die Decke des Einsteckfaches 24 beaufschlagt ist. Der Riegel ist breiter als die an der Decke des Einsteckfaches 24 gebildete Zahnstange 57, so dass er bei einer Verschiebung des Schlittens 54 nicht in Zahnzwischenräume der Zahnstange 57 einhakt.

Eine Möbelplatte, die der Kältegerätetür vorgeblendet ist, die die Baugruppe aus Basisteil 6, Schlitten 54 und Trägerteil 7 aufnimmt, ist mit 77 bezeichnet. Wie man sieht, könnte das Basisteil 7 unter Beibehaltung der in Fig. 9 gezeigten Position seiner Schwenkachse nicht nennenswert über 90° hinaus schwenken.

Fig. 10 zeigt die Baugruppe mit dem Abstellteil 7 in ausgeschwenkter Stellung. Die Achszapfen 72, die die Schwenkachse definieren, sind über die Möbelplatte 77 hinaus vorgerückt, so dass diese die Schwenkbewegungsfreiheit praktisch nicht einschränkt. Die gekrümmte Zahnstange 57 ist weitgehend aus dem Mechanikmodul 25 herausgezogen, und ihr Vorsprung 67 befindet sich nahe an einem oberen Ende der Rippen 66. Die in Fig. 10 nicht dargestellte Rückstellfeder 68 ist stark gespannt. Ein an der Unterseite der Wand 58 gebildeter Vorsprung 71 schlägt gegen einen Achszapfen 72 des Abstellteiles 7 an, der durch die Achsaufnahmeöffnung 55 in das Mechanikmodul 25 eingreift, und definiert so eine Anschlagstellung, über die das Abstellteil 7 nicht hinausgeschwenkt werden kann.

Wenn das Abstellteil 7 diese Anschlagstellung erreicht hat, ist der Vortrieb des Schlittens 54 gerade so groß, dass der Riegel 69 vollständig aus dem Einsteckfach 24 ausgefahren ist und ein rückwärtiges Ende des Riegels 69 durch die Feder 70 ein Stück weit angehoben wird. Wenn der Benutzer das Abstellteil 7 in dieser Stellung loslässt, übt zwar die Rückstellfeder 68 eine Zugkraft auf die gekrümmte Zahnstange 57 aus, um das Abstellteil 7 in die geschlossene Stellung zurückzuholen, da aber gleichzeitig der Riegel 69 an das Basisteil 6 gedrückt wird, kann das Abstellteil 7 nicht zurückschwenken. Das Abstellteil 7 wird so in der in Fig. 10 gezeigten Stellung verankert. Der Benutzer kann somit ein zu befüllendes Gefäß auf dem Abstellteil 7 oder in dem Basisteil 6 platzieren, ohne das Abstellteil 7 festhalten zu müssen.

Indem der Benutzer nach dem Befüllen des Gefäßes den Riegel 69 niederdrückt, wird die Verriegelung des Abstellteiles 7 und des Schlittens 54 gelöst, so dass beide angetrieben von der Rückstellfeder 68 in die in Fig. 9 gezeigte Konfiguration zurückkehren.

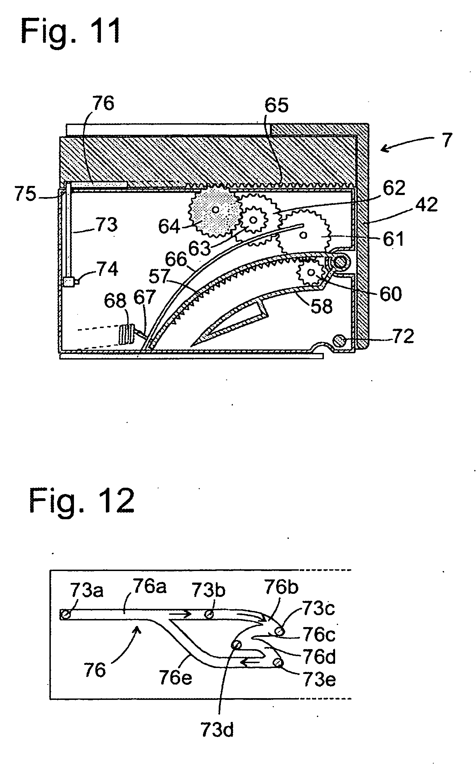

Fig. 11 zeigt einen zu Fig. 9 analogen Schnitt durch eine Baugruppe gemäß einer dritten Ausgestaltung der Erfindung. Die äußere Gestalt des Basisteiles 6, des Schlittens 54 und des Abstellteiles 7 ist im Wesentlichen die gleiche wie bei der mit Bezug auf Figuren 6 bis 10 beschriebenen zweiten Ausgestaltung. Lediglich der Riegel 69 ist entfallen. Er ist ersetzt durch eine Stange 73, von der ein unteres Ende um einen am Gehäuse des Mechanikmoduls 25 festen Stift 74 schwenkbar ist und von dem ein oberes Ende durch einen sich quer zur Schnittebene der Fig. 11 erstreckenden Schlitz 75 aus dem Gehäuse des Mechanikmoduls 25 heraus und in eine an der Decke des Einsteckfaches 24 geformte Nut 76 erstreckt.

Fig. 12 zeigt eine Ansicht von unten dieser Decke des Einsteckfaches 24 und der darin gebildeten Nut 76 sowie diverse Positionen, die die Stange 73 in dieser Nut 76 einnehmen kann.

Die in Fig. 11 gezeigte geschlossene Stellung des Abstellteiles 7 entspricht einer Stellung der Stange 73 an einem rückwärtigen Ende der Nut 76, wie in Fig. 12 mit 73a bezeichnet. Wenn das Abstellteil 7 ausgeschwenkt wird und dadurch der Schlitten 54 nach vorn (bzw. in den Figuren 11, 12 nach rechts) gleitet, bewegt sich die Stange 73 entlang eines geradlinigen Abschnittes 76a der Nut 76 nach vorn über eine in der Fig. 12 mit 73b bezeichnete Stellung. Kurz bevor das Abstellteil 7 eine wie in Fig. 10 gezeigt durch den Kontakt des Vorsprunges 71 mit dem Achszapfen 72 definierte Anschlagstellung erreicht, erreicht die Stange 73 einen gekrümmten Abschnitt 76b der Nut 76 und folgt diesem, wobei sie um den Stift 74 schwenkt, bis zu einer Anschlagposition 73c. Wenn der Benutzer an dieser Anschlagstellung das Abstellteil 7 loslässt und dieses, angetrieben von der Rückstellfeder 68, wieder aufwärts schwenkt, läuft die Stange 73 nicht auf dem zuvor zurückgelegten Weg in der Nut 76 zurück, sondern tritt in einen zweiten gekrümmten Abschnitt 76c der Nut 76 ein und durchläuft diesen bis zu einer mit 73d bezeichneten Anschlagstellung, in der der Kontakt des Stiftes 74 mit den Wänden der Nut ein weiteres Schließen des Abstellteiles 7 verhindert. Dieses befindet sich somit in einer stabilen geöffneten Stellung, in der wie in der verriegelten Stellung der Fig. 9 ein Behälter auf dem Abstellteil 7 oder in dem Basisteil 6 zur Befüllung platziert werden kann.

Indem nach dem Befüllen der Benutzer das Abstellteil 7 ein zweites Mal über die verriegelte Stellung hinaus schwenkt, gelangt die Stange 73 unter weiterem Schwenken um den Stift 74 über einen Abschnitt 76d der Nut 76 in eine dritte Anschlagstellung 73e, aus der die Stange 73 auf einem mit 76e bezeichneten Weg in die Ausgangsstellung 73a zurück gelangen und somit das Abstellteil 7 in seine geschlossene Stellung zurückkehren kann. Das heißt, durch einmaliges Aufschwenken des Abstellteiles 7 gelangt dieses in eine stabile offene Stellung, und durch erneutes Schwenken in dieselbe Richtung und anschließendes Loslassen kehrt es angetrieben durch die Rückstellfeder 68 in die geschlossene Stellung zurück.

Um eine heftige, mit Geräuschentwicklung verbundene Schließbewegung des Abstellteiles 7 zu vermeiden, kann die Schließbewegung des Abstellteiles 7 durch Reibung, beispielsweise der Zahnräder 60 bis 64, gebremst sein, oder es kann gekoppelt an eines der Zahnräder 60 bis 64 ein Schwungrad in dem Mechanikmodul 25 untergebracht sein, das in einer Anfangsphase der Schließbewegung beschleunigt wird und dadurch die Schließbewegung verlangsamt und diese ggf. in einer Endphase, in der die Rückstellkraft der Feder 68 nur noch gering ist, antreibt.

## Patentansprüche

1. Ausgabegerät für fließ- oder schüttfähige Güter, mit einer Ausgabeöffnung (3) für die Güter, die in einer Nische (2) an einer Frontseite des Geräts platziert ist, und mit einem wenigstens eine erste Abstellfläche (44) für einen an der Ausgabeöffnung (3) zu befüllenden Behälter (8) aufweisenden Abstellteil (7), wobei das Abstellteil (7) an der Nische (2) zwischen einer ersten Stellung, in welcher die erste Abstellfläche (44) der Ausgabeöffnung (3) in einem ersten Abstand gegenüberliegt, und einer zweiten Stellung geführt bewegbar ist, in der wenigstens eine Abstellfläche (45, 14) der Ausgabeöffnung (3) in einem zweiten Abstand gegenüber-liegt, der größer als der erste Abstand ist, **dadurch gekennzeichnet, dass** das Abstellteil (7) an der Nische (2) über einen in Tiefenrichtung der Nische (2) verschiebbaren Schlitten (54) gehalten ist.

2. Ausgabegerät nach Anspruch 1, **dadurch gekennzeichnet, dass** es ein Einbaugerät ist.

3. Ausgabegerät nach Anspruch 1 oder 2, **dadurch gekennzeichnet, dass** eine Verschiebung des Schlittens (54) an die Bewegung des Abstellteils (7) gekoppelt ist und dass der Schlitten (54) eine in die Nische (2) eingefahrene Stellung einnimmt, wenn das Abstellteil (7) in der ersten Stellung ist, und eine aus der Nische (2) ausgefahrene Stellung einnimmt, wenn das Abstellteil (7) in der zweiten Stellung ist.

4. Ausgabegerät nach Anspruch 3, **dadurch gekennzeichnet, dass** der Schlitten (54) ein Getriebe (60-64) umfasst, das durch eine Bewegung des Abstellteils (7) zwischen der ersten und der zweiten Stellung angetrieben ist und an eine ortsfeste Zahnstange (65) koppelt.

5. Ausgabegerät nach Anspruch nach einem der Ansprüche 1 bis 4, **dadurch gekennzeichnet, dass** der Schlitten (54) an einem in der Nische (2) lösbar verankerten Basisteil (6) geführt ist.

6. Ausgabegerät nach Anspruch 5, **dadurch gekennzeichnet, dass** das Abstellteil (7) an den Schlitten (54) angelenkt ist.

7. Ausgabegerät nach Anspruch 1, **dadurch gekennzeichnet, dass** das Abstellteil (7) an ein in der Nische (2) lösbar verankertes Basisteil (6) angelenkt ist

8. Ausgabegerät nach Anspruch 5, 6 oder 7, **dadurch gekennzeichnet, dass** das Basisteil (6) zumindest einen unteren Bereich der Nische (2) auskleidet.

9. Ausgabegerät nach einem der Ansprüche 5 bis 8, **dadurch gekennzeichnet, dass** das Basisteil (6) in der Nische (2) durch Schienen (30) geführt ist, die sich in einer Entnahmerichtung des Basisteils (6) erstrecken, und durch einen quer zu der Entnahmerichtung einsteckbaren Stift (22) gesichert ist.

10. Ausgabegerät nach einem der Ansprüche 5 bis 9, **dadurch gekennzeichnet, dass** das Basisteil (6) und die Nische (2) einen Vorsprung (19) bzw. eine Aussparung (29) umfassen, die sich in der Entnahmerichtung des das Basisteils (6) erstrecken, und dass das Basisteil (6) durch einen quer zu der Entnahmerichtung einsteckbaren Stift (22) gesichert ist.

11. Ausgabegerät nach Anspruch 9 und Anspruch 10, **dadurch gekennzeichnet, dass** der Stift (22) in der ersten Stellung durch das Abstellteil (7) verdeckt ist.

12. Ausgabegerät nach Anspruch 1, **dadurch gekennzeichnet, dass** die der Ausgabeöffnung (3) in dem zweiten Abstand gegenüberliegende Abstellfläche (45,14) eine zweite Abstellfläche (14) ist, die in der ersten Stellung durch das Abstellteil (7) verdeckt ist.

13. Ausgabegerät nach Anspruch 1, **dadurch gekennzeichnet, dass** die der Ausgabeöffnung (3) in dem zweiten Abstand gegenüberliegende Abstellfläche die erste Abstellfläche selbst in der zweiter Stellung ist.

14. Ausgabegerät nach Anspruch 1, **dadurch gekennzeichnet, dass** die der Ausgabeöffnung (3) in dem zweiten Abstand gegenüberliegende Abstellfläche eine an dem Abstellteil (7) gebildete dritte Abstellfläche (45) ist.

15. Ausgabegerät nach einem der vorhergehenden Ansprüche 1 und 12 bis 14, **dadurch gekennzeichnet, dass** das Abstellteil (7) sich in der ersten Stellung innerhalb der Nische (2) und in der zweiten Stellung wenigstens teilweise außerhalb der Nische (2) befindet.

16. Ausgabegerät nach einem der vorhergehenden Ansprüche 1 und 12 bis 14, **gekennzeichnet durch** ein Rückstellelement (68), das das Abstellteil (7) in seiner zweiten Stellung in die erste Stellung beaufschlagt.

17. Ausgabegerät nach Anspruch 16, **dadurch gekennzeichnet, dass** das Abstellteil (7) in der zweiten Stellung verrastbar ist.

18. Ausgabegerät nach Anspruch 17, **dadurch gekennzeichnet, dass** das Abstellteil (7) in der zweiten Stellung durch einen Riegel (69) verrastet ist, und dass der Riegel (69) durch Drücken einer Taste (69) verschiebbar ist, um die Verrastung aufzuheben.

19. Ausgabegerät nach Anspruch 17, **dadurch gekennzeichnet, dass** das Abstellteil (7) durch einmaliges Bewegen aus der ersten Stellung über die zweite Stellung hinaus in der zweiten Stellung verrastbar und durch erneutes Bewegen über die zweite Stellung hinaus entrastbar ist.

## Claims

1. Dispensing apparatus for flowable or pourable materials, with a delivery opening (3) for the materials, which is placed in a niche (2) at a front side of the apparatus, and with at least one first support surface (44) for a support member (7) having a container (8) to be filled at the delivery opening (3), wherein the support member (7) is guided at the niche (2) to be movable between a first setting in which the first support surface (44) is disposed opposite the delivery opening (3) at a first spacing and a second setting in which at least one support surface (45, 14) is disposed opposite the delivery opening (3) at a second spacing greater than the first spacing, **characterised in that** the support member (7) is held at the niche (2) by way of a slide (54) displaceable in depth direction of the niche (2).

2. Dispensing apparatus according to claim 1, **characterised in that** it is a built-in apparatus.

3. Dispensing apparatus according to claim 1 or 2, **characterised in that** a displacement of the slide (54) is coupled with the movement of the support member (7) and that the slide (54) adopts a setting moved into the niche (2) when the support member (7) is in the first setting and adopts a setting moved out of the niche (2) when the support member (7) is in the second setting.

4. Dispensing apparatus according to claim 3, **characterised in that** the slide (54) comprises a transmission (60-64) which is driven by a movement of the support member (7) between the first and the second setting and is coupled to a stationary rack (65).

5. Dispensing apparatus according to any one of claims 1 to 4, **characterised in that** the slide (54) is guided at a base member (6) releasably fixed in the niche (2).

6. Dispensing apparatus according to claim 5, **characterised in that** the support member (7) is articulated to the slide (54).

7. Dispensing apparatus according to claim 1, **characterised in that** the support member (7) is articulated to a base member (6) releasably fixed in the niche (2).

8. Dispensing apparatus according to claim 5, 6 or 7, **characterised in that** the base member (6) covers at least a lower region of the niche (2).

9. Dispensing apparatus according to any one of claims 5 to 8, **characterised in that** the base member (6) is guided in the niche (2) by rails (30), which extend in a removal direction of the base member (6), and is secured by a pin (22) insertable transversely to the removal direction.

10. Dispensing apparatus according to any one of claims 5 to 9, **characterised in that** the base member (6) and the niche (2) have a projection (19) and a cut-out (29), respectively, which extend in the removal direction of the base member (6), and that the base member (6) is secured by a pin (22) insertable transversely to the removal direction.

11. Dispensing apparatus according to claim 9 and claim 10, **characterised in that** the pin (22) is covered in the first setting by the support part (7).

12. Dispensing apparatus according to claim 1, **characterised in that** the support surface (45, 14) opposite the delivery opening (3) at the second spacing is a second support surface (14), which is covered in the first setting by the support member (7).

13. Dispensing apparatus according to claim 1, **characterised in that** the support surface opposite the delivery opening (3) at the second spacing is the first support surface itself in the second setting.

14. Dispensing apparatus according to claim 1, **characterised in that** the support surface opposite the delivery opening (3) at the second spacing is a third support surface (45) formed at the support member (7).

15. Dispensing apparatus according to any one of the preceding claims 1 and 12 to 14, **characterised in that** the support member (7) in the first setting is disposed within the niche (2) and in the second setting is disposed at least partly outside the niche (2).

16. Dispensing apparatus according to any one of the preceding claims 1 and 12 to 14, **characterised by** a restoring element (68) which loads the support member (7), when in its second setting, into the first setting.

17. Dispensing apparatus according to claim 16, **characterised in that** the support member (7) is detentable in the second setting.

18. Dispensing apparatus according to claim 17, **characterised in that** the support member (7) is detented in the second setting by a latch (69) and that the latch (69) is displaceable, by pressing a button (69), to cancel the detenting.

19. Dispensing apparatus according to claim 17, **characterised in that** the support member (7) is detentable in the second setting by a single movement from the first setting out beyond the second setting and is releasable from detenting by repeated movement out beyond the second setting.

## Revendications

1. Appareil distributeur pour des produits coulants ou en vrac, comprenant une ouverture de distribution (3) pour les produits, qui est placée dans une niche (2) sur un côté frontal de l'appareil, et comprenant une pièce de pose (7) présentant au moins une première surface de pose (44) pour un récipient (8) à remplir à l'ouverture de distribution (3), la pièce de pose (7) sur la niche (2) étant déplaçable en étant guidée entre une première position, dans laquelle la première surface de pose (44) est située à l'opposé de l'ouverture de distribution (3) avec un premier écart, et une deuxième position, dans laquelle au moins une surface de pose (45, 14) est située à l'opposé de l'ouverture de distribution (3) avec un second écart qui est plus grand que le premier écart, **caractérisé en ce que** la pièce de pose (7) est maintenue sur la niche (2) par l'intermédiaire d'un chariot (54) coulissant dans le sens de la profondeur de la niche (2).

2. Appareil distributeur selon la revendication 1, **caractérisé en ce que** c'est un appareil encastrable.

3. Appareil distributeur selon la revendication 1 ou 2, **caractérisé en ce qu'**un déplacement du chariot (54) est couplé au mouvement de la pièce de pose (7) et **en ce que** le chariot (54) prend une position rentrée dans la niche (2) lorsque la pièce de pose (7) est dans la première position, et **en ce qu'**il prend une position sortie de la niche (2) lorsque la pièce de pose (7) est dans la deuxième position.

4. Appareil distributeur selon la revendication 3, **caractérisé en ce que** le chariot (54) comprend un engrenage (60 - 64) qui est entraîné par un mouvement de la pièce de pose (7) entre la première et la deuxième positions et est couplé à une crémaillère stationnaire (65).

5. Appareil distributeur selon l'une quelconque des revendications 1 à 4, **caractérisé en ce que** le chariot (54) est guidé sur une pièce de base (6) fixée dans la niche (2) de manière amovible.

6. Appareil distributeur selon la revendication 5, **caractérisé en ce que** la pièce de pose (7) est articulée au chariot (54).

7. Appareil distributeur selon la revendication 1, **caractérisé en ce que** la pièce de pose (7) est articulée à une pièce de base (6) fixée dans la niche (2) de manière amovible.

8. Appareil distributeur selon la revendication 5, 6 ou 7, **caractérisé en ce que** la pièce de base (6) recouvre au moins une zone inférieure de la niche (2).

9. Appareil distributeur selon l'une quelconque des revendications 5 à 8, **caractérisé en ce que** la pièce de base (6) est guidée dans la niche (2) au moyen de rails (30) qui s'étendent dans un sens de retrait de la pièce de base (6) et sont bloqués par une tige (22) enfichable transversalement au sens de retrait.

10. Appareil distributeur selon l'une quelconque des revendications 5 à 9, **caractérisé en ce que** la pièce de base (6) et la niche (2) comprennent une saillie (19) resp. un évidement (29) qui s'étendent dans le sens de retrait de la pièce de base (6), et **en ce que** la pièce de base (6) est bloquée par une tige (22) enfichable transversalement au sens de retrait.

11. Appareil distributeur selon la revendication 9 et la revendication 10, **caractérisé en ce que** la tige (22) est recouverte par la pièce de pose (7) dans la première position.

12. Appareil distributeur selon la revendication 1, **caractérisé en ce que** la surface de pose (45, 14) située à l'opposé de l'ouverture de distribution (3) dans le deuxième écart est une deuxième surface de pose (14) qui est recouverte par la pièce de pose (7) dans la première position.

13. Appareil distributeur selon la revendication 1, **caractérisé en ce que** la surface de pose située à l'opposé de l'ouverture de distribution (3) dans le deuxième écart est la première surface de pose, même dans la deuxième position.

14. Appareil distributeur selon la revendication 1, **caractérisé en ce que** la surface de pose située à l'opposé de l'ouverture de distribution (3) dans le deuxième écart est une troisième surface de pose (45) formée sur la pièce de pose (7).

15. Appareil distributeur selon l'une quelconque des revendications précédentes 1 et 12 à 14, **caractérisé en ce que** la pièce de pose (7) se trouve à l'intérieur de la niche (2) dans la première position et au moins en partie à l'extérieur de la niche (2) dans la deuxième position.

16. Appareil distributeur selon l'une quelconque des revendications précédentes 1 et 12 à 14, **caractérisé par** un élément de rappel (68) qui précontraint la pièce de pose (7) de sa deuxième position vers la première position.

17. Appareil distributeur selon la revendication 16, **caractérisé en ce que** la pièce de pose (7) peut être enclenchée dans la deuxième position.

18. Appareil distributeur selon la revendication 17, **caractérisé en ce que** la pièce de pose (7) est enclenchée dans la deuxième position par une targette (69), et **en ce que** la targette (69) est déplaçable en appuyant sur une touche (69) afin de supprimer l'enclenchement.

19. Appareil distributeur selon la revendication 17, **caractérisé en ce que** la pièce de pose (7) peut être enclenchée dans la deuxième position au moyen d'un seul mouvement passant de la première position au-delà de la deuxième position, et **en ce qu'**elle peut être désenclenchée au moyen d'un mouvement répété passant au-delà de la deuxième position.
